# EUROPÄISCHE PATENTANMELDUNG

(11) **EP 0 571 798 A1**
(43) Veröffentlichungstag der Anmeldung: **01.12.1993**
(21) Anmeldenummer: 93107508.9
(22) Anmeldetag: 08.05.1993
(51) Int. Cl.: B09B 3/00, E21B 43/38, E21B 43/17, E21B 43/12, E21B 43/14

(54) **Verfahren zum Ausbringen von Ölresten oder ölhaltigen Flüssigkeiten aus verseuchten Bodenschichten**

(30) Priorität: 23.05.1992 DE 4217184
(71) Anmelder: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(57) **Zusammenfassung**

Bei dem Verfahren zum Ausbringen von ölresten oder ölhaltigen Flüssigkeiten aus verseuchten Bodenschichten werden mehrere Bohrlöcher (10 - 12) in den verseuchten Bodenbereich niedergebracht, werden durch Ausspülen von Bodenschichtbereichen für ein Fließen von Flüssigkeiten ausreichende Verbindungskanäle zwischen den Bohrlöchern geschaffen und wird dann mindestens eines der Bohrlöcher unter Unterdruck gesetzt. Aus der dadurch hochgesaugten Säule aus ölresten und Trägerflüssigkeit sondern sich die ölhaltigen Rückstände aus und können mittels einer Pumpe (30) entfernt werden. Das Verfahren ist umweltschonend und vermeidet eine Grundwasserabsenkung.

## Beschreibung

Die Erfindung betrifft ein Verfahren zum Ausbringen von ölresten oder ölhaltigen Flüssigkeiten aus verseuchten Bodenschichten.

Es ist grundsätzlich bekannt, erschöpfte öllagerstätten mit einer Spülflüssigkeit zu füllen und diese mit den ölresten versetzte Spülflüssigkeit anschließend abzupumpen und aus der Spülflüssigkeit die ölreste auszuscheiden. Für die Sanierung von mit öl verunreinigten Bodenschichten kann dieses Verfahren nieht einfach übernommen werden, vor allem dann nicht, wenn der zu reinigende Bereich in Wohngebieten oder landwirtschaftlich intensiv genutzten Bereichen liegt. Dort muß eine Veränderung des Grundwasserspiegels, die bei einer Anwendung dieses bekannten Verfahrens unumgänglich wäre, unbedingt vermieden werden.

Der Erfindung liegt die Aufgabe zugrunde, ein Verfahren zum Ausbringen von ölresten mit Hilfe einer Trägerflüssigkeit so anszubilden, daß hierbei keine unerwünschte Beeinträchtigung der Umwelt stattfindet. Die gestellte Aufgabe wird mit einem Verfahren gelöst, das erfindungsgemäß folgende Verfahrensschritte umfaßt:
a) Niederbringen von mindestens zwei einander benachbarten Bohrlöchern in die verseuchte Bodenschicht und zwecks Bildung von Verbindungskanälen zwischen den einzelnen Bohrlöchern Lockern und mindestens teilweises Ausspülen von Bestandteilen des die Bohrlochenden umgebenden Bodenmaterials durch Einpressen und/oder Absaugen von Flüssigkeit in bzw. aus mindestens einem der Bohrlöcher;
b) Erzeugung von Unterdruck in mindestens einem der Bohrlöcher zum Hochsaugen der Flüssigkeit; Nachlieferung von Spülflüssigkeit oder Luft in mindestens eines der anderen Bohrlöcher unter Aufrechterhaltung einer Druckdifferenz zwischen den beiden Bohrlöchern;
c) Absaugen des sich in dem unter Unterdruck stehenden Bohrloch in der angehobenen Flüssigkeitssäule aus der Flüssigkeit abgeschiedenen öles oder einer ölhaltigen Deckschicht der Flüssigkeitssäule mittels einer Flüssigkeitsförderpumpe.

Durch den ersten Verfahrensschritt werden Verbindungskanäle zwischen den einzelnen Bohrlöchern mindestens insoweit geschaffen, daß bei der Unterdruckbildung in einem der Bohrlöcher gemäß dem zweiten Verfahrensschritt eine an den anderen Bohrlöchern wirksame Druckdifferenz entsteht, die mindestens zwischen den Bohrlöchern eine Flüssigkeitsbewegung erzwingt. Dabei kann entweder das Grundwasser und/oder eine in Bohrlöcher eingegebene Spülflüssigkeit bewegt werden. Bei dem Verfahren wird überhaupt kein Abpumpen von Flüssigkeit aus den Bodenschichten oder nur ein sehr langsames Entnehmen von Flüssigkeit, das den gleichzeitigen Rückfluß oder Nachfluß von Flüssigkeit gleicher Menge sicherstellt, vorgenommen. Dabei wird ein in seinem Ausmaß unerwarteter Vorteil wahrgenommen, daß in dem unter Unterdruck stehenden Bohrloch eine rasche Entmischung von öl und Wasser oder Spülflüssigkeit stattfindet, so daß das öl aus dem Bohrloch mittels einer einfachen Flüssigkeitsförderpumpe abgezogen werden kann.

Das Verfahren hat den weiteren Vorteil, daß nur Bohrlöcher mit relativ kleinem Durchmesser erforderlich sind und daß beim Einsatz mehrerer und gleichmäßig verteilter Bohrlöcher die einzelnen Bohrlöcher abwechselnd unter Unterdruck gesetzt werden können, so daß sich in dem zu reinigenden Bodenbereich Flüssigkeitsströmungen auch in unterschiedlichen Richtungen nacheinander erzwingen lassen, was den Reinigungseffekt erhöht.

Die Bohrlöcher können auch unterschiedlich tief geführt werden, so daß sich auch Strömungen mit vertikalen Richtungskomponenten erzwingen lassen. Als vorteilhaft hat sich herausgestellt, nach einer bestimmten Behandlungszeit die Bohrlöcher gemeinsam tiefer zu treiben, so daß ein Verunreinigungsherd horizontalschichtweise gereinigt wird. In jedem Falle besteht bei dem Verfahren auch der wichtige Vorteil, daß nur der verseuchte Bereich bearbeitet wird, ein Verbringen von Verunreinigungen in andere, unverseuchte Bodenschichten aber vermieden wird. Vorteilhafter- weise kann das Verfahren auch intermittierend erfolgen, wobei in dem unter Unterdruck stehenden Bohrloch durch zeitweiliges Absetzen des Unterdruckes ein Absenken des Flüssigkeitsspiegels erfolgt, der das Nachströmen neuer und ölhaltiger Flüssigkeitsanteile in die Bohrung erleichtert.

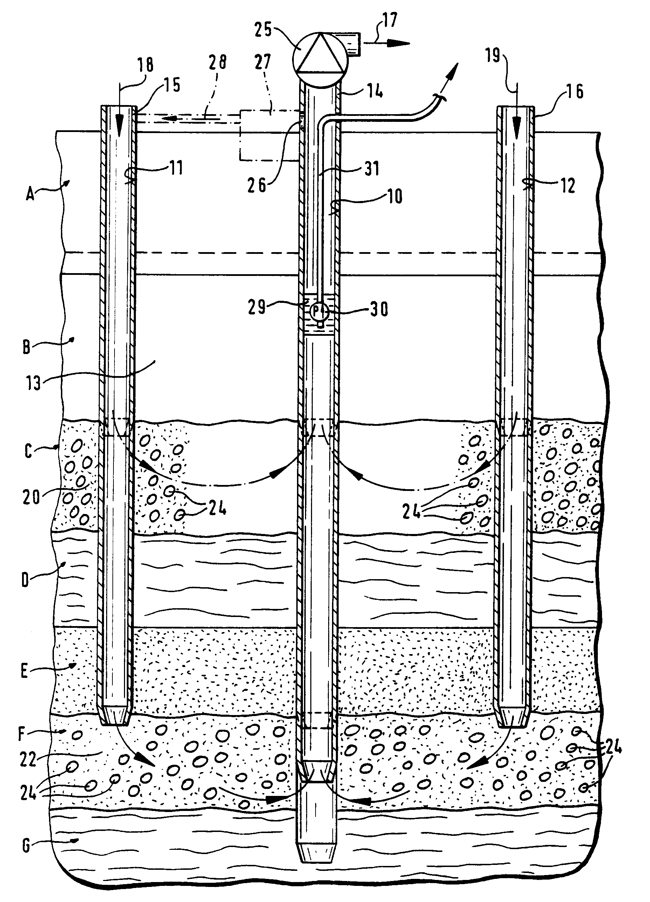

Nachfolgend wird ein Ausführungsbeispiel einer Anordnung zur Durchführung des Verfahrens anhand der beiliegenden Zeichnung näher erläutert. Sie zeigt einen Vertikalschnitt durch drei in einen mit öl verunreinigten Bodenbereich eingebrachte Bohrlöcher.

Zu beiden Seiten eines zentralen Bohrloches 10, das zweckmäßig verrohrt ist, sind benachbart zwei zusätzliche Bohrlöcher 11 und 12 in einen aus mehreren Schichten A - G bestehenden, mit öl verunreinigten Bodenbereich 13 getrieben. Hierzu können Bohrrohre 14, 15 und 16 verwendet werden, die in den Boden eingedreht oder eingerammt werden und mit welchen nach Entfernen des Bohrkernes das Verfahren durchgeführt werden kann. Die Anlage ist zur Behandlung von zwei der mehreren Bodenschichten vor- gesehen, nämlich der Bodenschichten C und F, in denen eine besonders starke ölverschmutzung festgestellt worden ist. Es handelt sich hier beipielsweise um Sedimentschichten, die überwiegend aus Sand und Kies bestehen.

Sobald die drei Bohrlöcher 10 - 12 bis zu der Bodenschicht C niedergebracht worden sind, wird ein teilweises Ausspülen dieser Bodenschicht dadurch vorgenommen, daß beispielsweise in das zentrale Bohrrohr 14 Wasser unter hohem Druck gepreßt wird, während gleichzeitig aus den beiden anderen Bohrrohren 15 und 16 das eingepreßte Druckwasser und durch es in der Schicht C gelockertes Sand- und Kiesmaterial abgesaugt werden. Dieser Vorgang ist in der Zeichnung nicht dargestellt. Bei diesem mindestens teilweisen Freispülen von zwischen den einzelnen Bohrlöchern in der Bodenschicht C verlaufenden Kanälen kann mit dem Druckwassereintrag zwischen den drei Bohrrohren 14 - 16 auch gewechselt werden.

Nachdem Verbindungskanäle zwischen den eingebrachten Bohrlöchern 10 - 12 geschaffen worden sind, welche das Hindurchfließen von Grundwasser oder einer gesonderten eingebrachten Spülflüssigkeit erlauben, wird in dem zentralen Bohrloch 10 durch Aufsetzen eines Ventilators 25 ein Unterdruck erzeugt. Durch einen Pfeil 17 ist die hierbei abgesaugte Luft aus dem Bohrloch symbolisiert. Durch die Unterdruckbildung erfolgt im Inneren des Bohrloches eine Anhebung des Flüssigkeitsspiegels, und in dieser angehobenen Flüssigkeitssäule findet mindestens weitgehend eine Entmischung des öles und der Trägerflüssigkeit statt. In der Zeichnung ist eine auf der Trägerflüssigkeit schwimmende öllinse 29 dargestellt. Dieses öl kann mittels einer eingebrachten kleinen Förderpumpe 30 über eine Leitung 31 aus dem Bohrloch 10 abgepumpt werden. Durch Pfeile 18 und 19 an den Bohrlöchern 11 und 12 ist Spül- oder Trägerflüssig keit angedeutet, beispielsweise Wasser, die durch die beiden Bohrlöcher 11 und 12 in den Bodenbereich C nachgeliefert werden kann. Die beiden Bohrlöcher 11 und 12 können aber auch als reine Belüftungsbohrungen dienen, wenn sich in dem Bodenbereich C genügend Grundwasser befindet, das durch die Unterdruckbildung in dem zentralen Bohrloch 10 zu einer Bewegung veranlaßt werden kann.

Der Unterdruck in dem Bohrloch 10 kann auch so stark ausgebildet werden, daß die Flüssigkeit in dem Rohr 14 bis zu einer seitlichen Ausströmöffnung 26 hochgezogen wird. Wie in der Figur mit strickpunktierten Linien angedeutet ist, kann diese öffnung 26 über einen ölabscheider 27 und eine Verbindungsleitung mit dem Bohrloch 11 oder auch mit dem Bohrloch 12 verbunden sein. Die in das Bohrloch 11 rückfließende Trägerflüssigkeit ist durch einen Pfeil 28 symbolisiert.

Der Ventilator 25 kann abwechselnd auch auf die beiden anderen Bohrrohre 15 und 16 aufgesetzt werden, so daß diese Rohre unter Unterdruck gesetzt werden und in diesen Rohren dann ein Anheben des Flüssigkeitsspiegels mit Entmischung des öles stattfindet.

Wenn die Bodenschicht C gereinigt ist, werden die Bohrrohre 14 - 16 bis in die nächste zu reinigende Boden- schicht F weitergetrieben, wo dann durch Ausspülen wiederum zunächst Verbindungskanäle zwischen den einzelnen Bohrlöchern geschaffen werden. Es ist auch möglich, die Bereiche zwischen den Bohrlöchern in den einzelnen Bodenschichten zu ganzen Hohlräumen 20 oder 22 auszuspülen und diese Hohlräume zum Schutz gegen Einsturz mit einschwemmbaren Füllkörpern, beispielsweise Keramikkörpern 24, auszufüllen. Anschließend wird dann wieder eines der Bohrlöcher unter Unterdruck gesetzt und werden auf die bereits beschriebene Weise auch die in der Bodenschicht F vorhandenen ölreste entfernt.

## Patentansprüche

1. Verfahren zum Ausbringen von ölresten oder ölhaltigen Flüssigkeiten aus verseuchten Bodenschichten, gekennzeichnet durch folgende aufeinanderfolgende Verfahrens schritte:
a) Niederbringen von mindestens zwei einander benachbarten Bohrlöchern (10 - 12) in die verseuchte Bodenschicht (C, F) und zwecks Bildung von Verbindungskanälen zwischen den einzelnen Bohrlöchern Lockern und mindestens teilweises Ausspülen von Bestandteilen des die Bohrlochenden umgebenden Bodenmaterials durch Einpressen und/oder Absaugen von Flüssigkeit in bzw. aus mindestens einem der Bohrlöcher;
b) Erzeugung von Unterdruck in mindestens einem der Bohrlöcher (10) zum Hochsaugen der Flüssigkeit; Nachlieferung von Spülflüssigkeit oder Luft in mindestens eines der anderen Bohrlöcher (11, 12) unter Aufrechterhaltung einer Druckdifferenz zwischen den beiden Bohrlöchern;
c) Absaugen des sich in dem unter Unterdruck stehenden Bohrloch (10) in der angehobenen Flüssigkeitssäule aus der Flüssigkeit abgeschiedenen öles (29) oder einer ölhaltigen Deckschicht der Flüssigkeitssäule mittels einer Flüssigkeitsförderpumpe (30).

2. Verfahren nach Anspruch 1, dadurch gekennzeichnet, daß mehrere Bohrlöcher mit mindestens annähernd gleichmäßigen Abständen niedergebracht werden und abwechselnd mindestens eines der Bohrlöcher unter Unterdruck gesetzt und die anderen zur Nachlieferung von Flüssigkeit oder Luft unter Aufrechterhaltung einer Druck differenz zu dem unter Druck stehenden Bohrloch eingesetzt werden.

3. Verfahren nach Anspruch 1 oder 2, dadurch gekennzeichnet, daß nach einer bestimmten Behandlungszeit die Bohrlöcher tiefer getrieben und anschließend die Verfahrensschritte b) und c) wiederholt werden.

4. Verfahren nach einem der Ansprüche 1 - 3, dadurch gekennzeichnet, daß im Verfahrensschritt b) die Unterdruckerzeugung und damit das Hochsaugen von Flüssigkeit sowie entsprechend der anschließende Verfahrensschritt c) intermittierend erfolgen.

5. Verfahren nach einem der Ansprüche 1 - 4, dadurch gekennzeichnet, daß aus dem mindestens einen unter Unterdruck gesetzten Bohrloch ein langsames Hochsaugen der Flüssigkeit bis zu einer mit einem Ölabscheider (27) besetzten Ausströmöffnung (26) erfolgt.
